**Europäisches Patentamt**

**European Patent Office**

**Office européen des brevets**

(19)

(11) Veröffentlichungsnummer: **0 191 412**
**A1**

(12) # EUROPÄISCHE PATENTANMELDUNG

(21) Anmeldenummer: **86101485.0**

(22) Anmeldetag: **05.02.86**

(51) Int. Cl.⁴: **A 01 B 35/24, A 01 B 23/02**

(30) Priorität: **13.02.85 DE 3504779**

(43) Veröffentlichungstag der Anmeldung: **20.08.86**
**Patentblatt 86/34**

(84) Benannte Vertragsstaaten: **BE DE FR GB IT SE**

(71) Anmelder: **Krupp Brüninghaus GmbH, Im Ohl 3,
D-5980 Werdohl (DE)**

(72) Erfinder: **von Estorff, Eckart, Malinitzer Strasse 10,
D-5800 Hagen (DE)**
Erfinder: **Petruschke, Ernst, Falkenweg 4,
D-5885 Schalksmühle (DE)**
Erfinder: **Wied, Klaus, Strücken 34a,
D-5885 Schalksmühle (DE)**

(74) Vertreter: **Brake, Klaus, Dipl.-Ing., Kreuzstrasse 32,
D-4800 Bielefeld 1 (DE)**

(54) **Federzinken und Verfahren zu seiner Herstellung.**

(57) Ein Federzinken für landwirtschaftliche Geräte zur Bodenbearbeitung, wie Eggen, Grubber o. dgl., mit einem gebogenen Federblatt (10), dessen oberes Ende (13) als Befestigungsstelle für die lösbare Verbindung mit dem Gerät ausgebildet ist, und einem Träger (11) für die Anbringung eines Bearbeitungsteils (12), wie Eggenspitze, Schar o. dgl., weist einen Federstahlstab mit kreisrundem Querschnitt auf, der über einen Teil seiner Länge zu einem rechteckförmigen Querschnitt mit abgerundeten Schmalseiten abgeplattet ist.

EP 0 191 412 A1

ACTORUM AG

## Federzinken und Verfahren zu seiner Herstellung

### Beschreibung

Die Erfindung betrifft einen Federzinken für landwirtschaftliche Geräte zur Bodenbearbeitung, wie Eggen, Grubber o.
dgl., mit einem gebogenen Federblatt, dessen oberes Ende
als Befestigungsstelle für die lösbare Verbindung mit dem
Gerät ausgebildet ist, und einem Träger für die Anbringung
eines Bearbeitungsteils, wie Eggenspitze, Schar o. dgl.

...

Ein mit Federzinken ausgerüstetes landwirtschaftliches Gerät zur Bodenbearbeitung wird mit Hilfe eines Schleppers über den Boden gezogen. Dabei greifen die Bearbeitungsteile der Federzinken in den Boden ein und lockern diesen auf. Wenn ein Bearbeitungsteil auf ein festes Hindernis im Boden auftrifft, verformt sich der Federzinken mit Hilfe seines Federblattes elastisch. Das Bearbeitungsteil kann dann dem Hindernis ausweichen.

Herkömmliche Federzinken sind beispielsweise aus der DE-OS 31 48 260, der US-PS 39 21 727, der DE-AS 17 57 146 und dem DE-GM 69 41 324 bekannt. Bei all diesen Federzinken ist das Ausgangsmaterial für das Federblatt und für die Herstellung des Trägers für das Bearbeitungsteil ein Federstahlstab mit rechteckigem Querschnitt. Dabei sind sowohl das Federblatt als auch der Träger gebogen, und der Träger ist zusätzlich auch noch gefaltet, so dass er einen etwa V-förmigen Querschnitt aufweist, um gegenüber dem einfachen Rechteckquerschnitt eine grössere Steifigkeit zu erbringen.

Die Herstellung der bekannten Federzinken ist daher arbeitsaufwendig. Jeder aus einem Federblatt und einem Träger einstückig ausgeführte Eggenzinken aus rechteckförmigem Material muss im unteren den Träger bildenden Teil durch zwei aufeinanderfolgende Bearbeitungsgänge zu einer im Querschnitt etwa V-förmigen Form gefaltet werden, bevor die Biegung der gekrümmten Form des Federzinkens durchgeführt werden kann. Zum Falten sind dabei teure Formen als Werkzeuge, in denen die Verformung durchgeführt wird, erforderlich.

Der Erfindung liegt die Aufgabe zugrunde, einen Federzinken zu schaffen, der zu seiner Herstellung einen geringeren Fer-

...

tigungsaufwand erfordert. Diese Aufgabe wird erfindungsgemäss dadurch gelöst, dass ein Federstahlstab mit kreisrundem Querschnitt verwendet wird, der auf einem Teil seiner Länge zu einem rechteckförmigen Querschnitt mit halbrunden Schmalseiten abgeplattet ist. Ein erfindungsgemässes Verfahren zeichnet sich dadurch aus, dass ein gerader Federstahlstab mit kreisförmigem Querschnitt auf eine Temperatur von 85o bis 95o° C erwärmt und auf einem Teil seiner Länge zu einem rechteckförmigen Querschnitt mit abgerundeten Schmalseiten abgeplattet wird, sodann an seinem abgeplatteten Ende beschnitten und an beiden Enden gelocht wird, und dass danach der Stab durch Biegen in seine gekrümmte Form gebracht und anschliessend gehärtet wird. Die das Falten des Trägers betreffenden Arbeitsgänge werden vollständig vermieden. Der Federstahlstab kann entweder in seinem Bereich mit kreisförmigem Querschnitt zu einem Träger mit gekrümmter Form gebogen und mit seinem abgeplatteten Ende an das untere Ende des gebogenen Federblattes angeschraubt werden. Oder es wird ein längerer Federstahlstab mit kreisförmigem Querschnitt verwendet, wobei die Abplattung auf einem dem Federblatt entsprechenden Teil seiner Länge durchgeführt wird und zusammen mit dem Biegen des dadurch entstehenden Federblattes auch das Biegen des sich daran anschliessenden Trägers mit dem kreisförmigen Querschnitt geschieht.

Bevorzugte Ausführungsformen sind in den Schutzansprüchen enthalten. Der Schutzumfang erstreckt sich nicht nur auf die beanspruchten Einzelmerkmale, sondern auch auf deren Kombination. Die mit der Erfindung erzielbaren Vorteile bestehen darin, dass ein Federzinken mit weniger Arbeitsaufwand als Träger gleicher Festigkeit, und damit im Bereich des

...

gekrümmten Federblattes bei gleichem Werstoffeinsatz mit einem um lo - 2o % niedrigeren, weil über die Blattlänge gleichmässigen, Spannungsniveau hergestellt werden kann als ein Federzinken der vorbekannten Bauart. Denn bei Abplatten des Federstahlstabes mit kreisrundem Querschnitt zu einem rechteckförmigen Querschnitt mit abgerundeten Schmalseiten, durchgeführt anstelle des bei Verwendung von Rechteckmaterial erforderlichen Faltens, entsteht kein Mehraufwand für die Herstellung einer über die Stablänge veränderlichen Querschnittsform. Beim Kugelstrahlen von Federzinken, deren Trägerteil kreisrunden Querschnitt aufweist, besteht nicht mehr die unerwünschte Erscheinung, dass Kugeln in der Trägerfalte hängenbleiben können. Infolgedessen ergibt sich auch beim anschliessenden Lackieren des Federzinkens eine saubere, rundum gegen Korrosion geschützte Oberfläche. Ein weiterer Vorteil besteht darin, dass der Federstahlstab im Bereich des Trägers einen Kreisquerschnitt mit exaktem Durchmesser hat, der die Voraussetzung für eine präzise Anlage des Bearbeitungsteils ist. Schliesslich kann der Träger mit kreisrundem Querschnitt für die Lochung, die erforderlich ist, um das Bearbeitungsteil anbringen zu können, in einer entsprechend geformten Werkstückaufnahme angeordnet werden. Bei den vorbekannten Federzinken ergibt sich beim Lochen an dem gefalteten Teil jeweils eine undefinierte Ausbauchung, die sich noch zusätzlich ungünstig auf die genaue Anlagemöglichkeit des Bearbeitungsteils auswirkt, und die bei dem erfindungsgemässen Federzinken vermieden wird. Ausführungsbeispiele der Erfindung sind in der Zeichnung dargestellt und werden im folgenden näher beschrieben. Es zeigen:

...

0191412

Fig. 1    eine Seitenansicht eines Federzinkens,
dessen Federblatt mit dem Träger als
einstückiges Bauteil ausgeführt ist;

Fig. 2    einen Querschnitt durch den Träger des
Federzinkens gemäss Linie II-II der Fig. 1;

Fig. 3    einen Schnitt durch das Federblatt des
Federzinkens gemäss Linie III-III der Fig. 1;

Fig. 4    eine Seitenansicht eines Federzinkens,
dessen Träger und Federblatt durch Verschraubung miteinander verbunden sind;

Fig. 5    einen Schnitt durch den Träger des Federzinkens nach Fig. 4 gemäss Linie V-V;

Fig. 6    einen Schnitt durch das Federblatt des
Federzinkens nach Fig. 4 gemäss
Linie VI-VI;

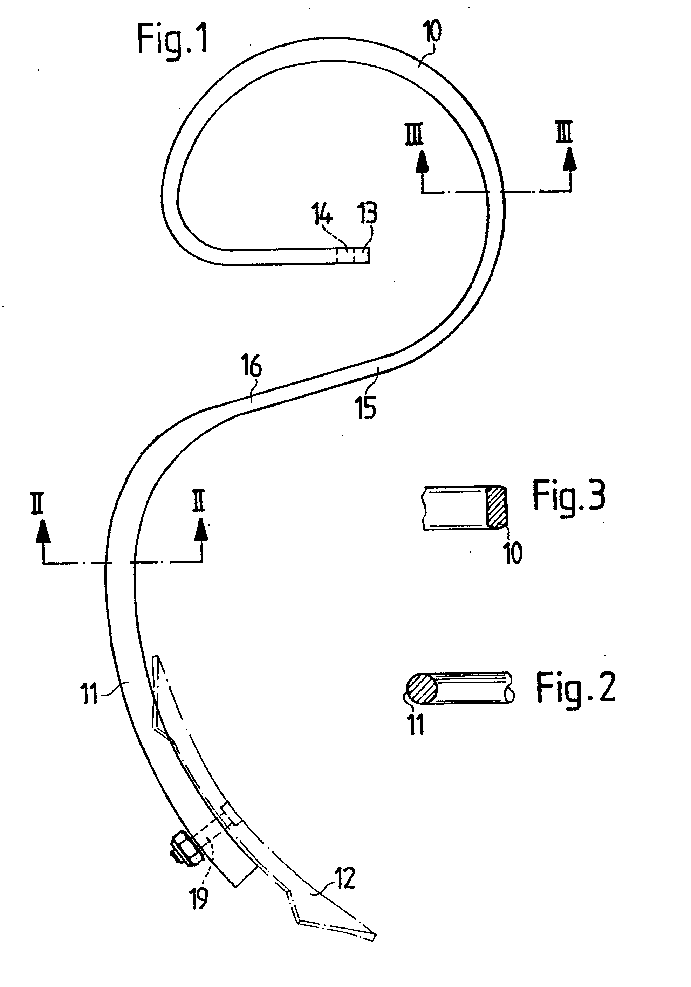

Der Federzinken gemäss Fig. 1 ist einstückig aus einem Federblatt lo und einem Träger 11 für ein anzubringendes pflugscharähnliches Bearbeitungsteil 12 gebildet. Er besteht aus
vergütetem Federstahl. Das Federblatt lo befindet sich im
oberen Bereich, sein oberes Ende 13 ist eingerollt und weist
eine Bohrung 14 auf, durch welche eine Befestigungsschraube
zum Befestigen des Federzinkens an einem Tragbalken des Gerätes hindurchgesteckt werden kann. Das Federblatt lo ist in
einer Richtung gebogen und geht mit seinem unteren Ende 15
in einem Wendepunkt 16 in den in der anderen Richtung gebogenen Träger 11 über. Zur Herstellung dieses Federzinkens wird
ein gerader Federstahlstab mit konstantem, kreisförmigen

...

Querschnitt im oberen Bereich, der das Federblatt lo bildet, abgeplattet, so dass dort rechteckförmige Querschnitte mit abgerundeten Schmalseiten und über die Stablänge veränderlicher Dicke und Breite entstehen. Der Teil, der den Träger 11 bildet, wird nicht abgeplattet. Nach der Querschnittsumformung wird das obere Ende 13 beschnitten und gelocht, so dass die Bohrung 14 entsteht; dann wird am unteren Ende des Trägers 11 ein weiteres Loch 19 angebracht, in welchem das Bearbeitungsteil 12 durch Verschraubung befestigt werden kann. Anschliessend wird die gesamte Biegung dieses einstückigen Teils durchgeführt, es wird also das Federblatt lo, wie in der Zeichnung dargestellt, gebogen und eingerollt, und der Träger 11 wird so geformt, dass er eine zur Krümmung des Federblattes lo entgegengesetzt gerichtete Krümmung aufweist. Schliesslich wird der gesamte Federzinken vergütet.

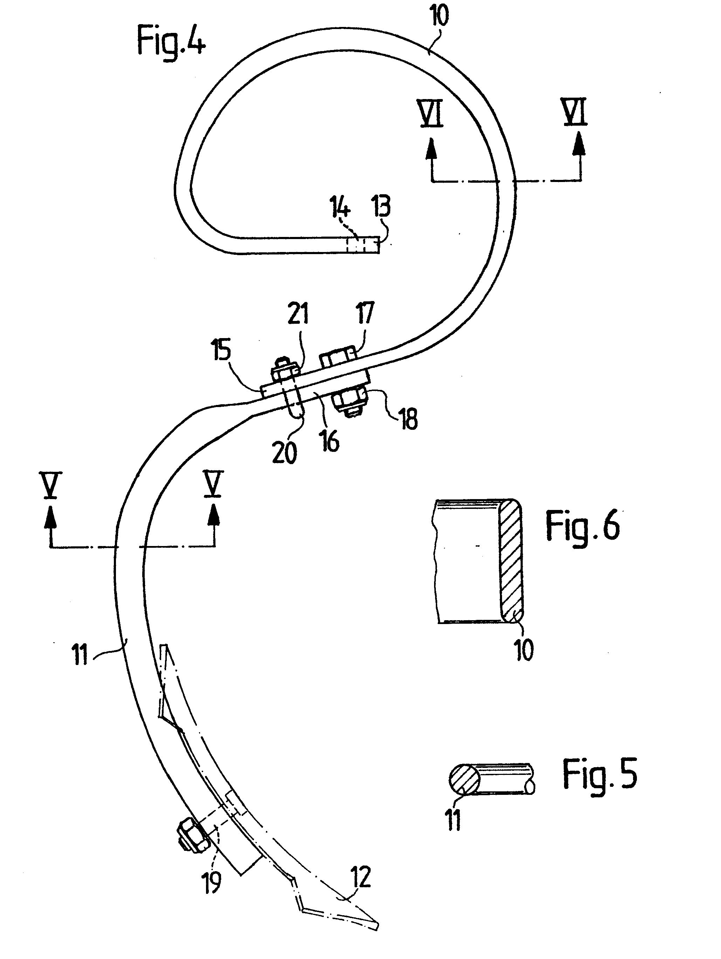

Der Federzinken gemäss Fig. 4 der Zeichnung ist im Prinzip ähnlich wie derjenige gemäss Fig. 1 aufgebaut, denn er weist im oberen Teil das gekrümmte Federblatt lo mit dem oberen Ende 13 und den beiden Bohrungen 14 für die Befestigung am Gerät auf. Am unteren Ende 15, in dessen Bereich sich der Wendepunkt 16 befindet, ist jedoch der Träger 11 als getrenntes Bauteil mit Hilfe der Schraube 17 und der Mutter 18 sowie des Bügels 2o und der beiden Muttern 21 lösbar befestigt. Dieser Federzinken ist also zweigeteilt ausgeführt, wobei die beiden Teile das Federblatt lo, welches in diesem Fall zum Zwecke der Verstärkung wesentlich breiter ausgeführt und an seinem oberen Befestigungsende 13 mit zwei nebeneinanderliegenden Bohrungen 14 versehen ist, und der Träger 11 sind, an dem das Bearbeitungsteil 12 befestigt werden kann. Bei der Herstellung dieses Federzinkens werden kürzere Federstahlstäbe mit kreisrundem Querschnitt als Ausgangsmaterial ver-

...

wendet, weil daraus nur der Träger 11 zur lösbaren Befestigung am unteren Ende 15 des Federblattes lo hergestellt wird, während das Ausgangsmaterial für das breitere Federblatt lo rechteckförmigen Querschnitt mit abgerundeten Schmalseiten aufweist. Deshalb wird der Federstahlstab auch lediglich an seinem oberen, den Wendepunkt 16 aufweisenden Ende abgeplattet und beschnitten sowie anschliessend an beiden Enden gelocht, in seine gekrümmte Form gebogen und anschliessend vergütet. Er ist dann für die lösbare Befestigung an dem unteren Ende 15 des Federblattes lo geeignet.

Federzinken und Verfahren zu seiner Herstellung

Patentansprüche

1. Federzinken für landwirtschaftliche Geräte zur Bodenbearbeitung, wie Eggen, Grubber o. dgl., mit einem gebogenen
Federblatt, dessen oberes Ende als Befestigungsstelle für
die lösbare Verbindung mit dem Gerät ausgebildet ist, und
einem Träger für die Anbringung eines Bearbeitungsteils,
wie Eggenspitze, Schar o. dgl., gekennzeichnet durch einen
Federstahlstab mit kreisrundem Querschnitt, der auf einem
Teil seiner Länge zu einem rechteckförmigen Querschnitt
mit abgerundeten Schmalseiten abgeplattet ist.

2. Federzinken nach Anspruch 1, dadurch gekennzeichnet, dass
das Federblatt (lo) mit dem Träger (11) als einstückiges
Bauteil ausgebildet ist, wobei der Träger (11) den kreisförmigen und das Federblatt (lo) den abgeplatteten Querschnitt des Federstahlstabes aufweist.

3. Federzinken nach Anspruch 2, dadurch gekennzeichnet, dass
das Federblatt (lo) über seine Länge veränderliche Dicke
und Breite aufweist.

4. Federzinken nach Anspruch 1, dadurch gekennzeichnet, dass
der Federstahlstab mit seinem abgeplatteten Ende an dem
Federblatt (lo) lösbar befestigt ist.

5. Verfahren zur Herstellung eines Federzinkens für landwirtschaftliche Geräte zur Bodenbearbeitung, wie Eggen, Grubber
o. dgl., mit einem gebogenen Federblatt, dessen oberes Ende

...

als Befestigungsstelle für die lösbare Verbindung mit dem Gerät ausgebildet ist, und einem Träger für die Anbringung eines Bearbeitungsteils, wie Eggenspitze, Schar o. dgl., dadurch gekennzeichnet, dass ein gerader Federstahlstab mit kreisförmigem Querschnitt auf eine Temperatur von 850 bis 950° C erwärmt und auf einem Teil seiner Länge zu einem rechteckförmigen Querschnitt mit abgerundeten Schmalseiten abgeplattet wird, sodann an seinem abgeplatteten Ende beschnitten und an beiden Enden gelocht wird, und dass danach der Stab durch Biegen in seine gekrümmte Form gebracht und anschliessend gehärtet wird.

6. Verfahren nach Anspruch 5, dadurch gekennzeichnet, dass die Abplattung des Federstahlstabes durch Auswalzung in einem Stich (Arbeitsgang) geschieht.

7. Verfahren nach Anspruch 5, dadurch gekennzeichnet, dass die Abplattung des Federstahlstabes durch Drücken mit einer Presse geschieht.

8. Verfahren nach Anspruch 5, dadurch gekennzeichnet, dass die Härtung des Federstahlstabes durch Abschrecken aus der Umformwärme heraus geschieht.

Fig.1

10

Ⅲ          Ⅲ

14  13

16

15

Fig.3

10

Ⅱ        Ⅱ

Fig.2

11

11

19        12

Fig.4

Fig.6

Fig.5

# 0191412

Nummer der Anmeldung

**Europäisches Patentamt**

## EUROPÄISCHER RECHERCHENBERICHT

| EINSCHLÄGIGE DOKUMENTE | | | EP 86101485.0 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| A | <u>DE - A1 - 2 903 620</u> (GÜTTLER, FRITZ) <br><br> * Ansprüche 1,2; Fig. 2 * <br><br> -- | 1,2,3, 4 | A 01 B 35/24 <br> A 01 B 23/02 |
| A | <u>DE - A1 - 3 233 887</u> (KONGSKILDE KONCERNSELSKAB A/S) <br><br> * Ansprüche 2,3; Fig. 1,2,3 * <br><br> -- | 1,2,3 | |
| D,A | <u>DE - B2 - 1 757 146</u> (KONGSKILDE KONCERNSELSKAB A/S) <br><br> * Anspruch 1; Fig. 1,2,3 * <br><br> -- | 1,2 | |
| A | <u>DE - A1 - 2 810 804</u> (VEB WEIMAR-KOMBINAT) <br><br> * Fig. 1,2 * <br><br> -- | 1,2 | |
| A | <u>US - A - 2 654 197</u> (EARL W. PETER-SON) <br><br> -- | | **RECHERCHIERTE SACHGEBIETE (Int. Cl.4)** <br><br> A 01 B 35/00 |
| A | <u>CH - A - 280 576</u> (IDELSPATEN- UND SCHAUFEL-WALZWERK) <br><br> ---- | | A 01 B 23/00 <br> A 01 B 19/00 <br> B 21 H 7/00 |

Der vorliegende Recherchenbericht wurde für alle Patentansprüche erstellt.

| Recherchenort | Abschlußdatum der Recherche | Prüfer |
|---|---|---|
| WIEN | 02-05-1986 | MENTLER |